# EUROPÄISCHE PATENTSCHRIFT

(11) **EP 2 844 681 B1**
(45) Veröffentlichungstag und Bekanntmachung des Hinweises auf die Patenterteilung: **13.07.2016**
(21) Anmeldenummer: 13711438.5
(22) Anmeldetag: 22.03.2013
(51) Int. Cl.: C08G 18/02, C08G 18/10, C08G 18/66, C08G 18/76, C08G 18/79, C08K 5/29, C08L 67/02, C08G 18/42

(54) **VERFAHREN ZUR STEUERUNG (VERLÄNGERUNG) DER TOPFZEIT IN KETTENVERLÄNGERTEN POLYURETHAN(PU)-BASIERTEN SYSTEMEN**
PROCESS FOR CONTROLLING (EXTENSION) OF POT LIFE OF CHAIN-EXTENDED POLYURETHANE (PU) BASED SYSTEMS
PROCEDE POUR CONTROLER (PROLONGATION) LA VIE EN POT DE SYSTEMES A BASE DE POLYURETHANE (PU) A CHAINE ALLONGEE

(30) Priorität: 03.05.2012 EP 12166641
(43) Veröffentlichungstag der Anmeldung: 11.03.2015
(73) Patentinhaber: Rhein Chemie Rheinau GmbH, 68219 Mannheim (DE)
(72) Erfinder: LAUFER, Wilhelm, 67158 Ellerstadt (DE); ECKERT, Armin, 68794 Oberhausen-Rheinhausen (DE); HAAS, Uwe, 68723 Oftersheim (DE); WUERTZ, Uwe, 69198 Schriesheim (DE)
(74) Vertreter: Siegers, Britta
(86) Internationale Anmeldenummer: PCT/EP2013/056153
(87) Internationale Veröffentlichungsnummer: WO 2013/164134

(56) Entgegenhaltungen:
- EP-A1- 0 850 985
- EP-A1- 0 878 496
- EP-A1- 2 040 306
- DE-A1- 1 620 609
- DE-A1- 1 643 127
- DE-A1- 2 504 400
- DE-A1- 2 537 685
- DE-A1- 2 941 253
- DE-B4- 19 580 248
- US-A- 3 406 198

## Beschreibung

Die Erfindung betrifft neue Verfahren zur Steuerung (Verlängerung) der Topfzeit in mit Diaminen kettenverlängerten Polyurethan(PU)-basierten Systemen, vorzugsweise PU-Elastomeren, PU-Klebstoffen und PU-Gießharzen.

Polyurethane entstehen durch Polyadditionsreaktion von Polyisocyanaten mit mehrwertigen Alkoholen, den Polyolen, nahezu quantitativ. Die Verknüpfung erfolgt durch die Reaktion einer Isocyanatgruppe (-N=C=O) eines Moleküls mit einer Hydroxygruppe (-OH) eines anderen Moleküls unter Bildung einer Urethangruppe (-NH-CO-O-).

Der Reaktionsverlauf zwischen Diisocyanat und Polyol ist abhängig von dem Molverhältnis der Komponenten. Zwischenstufen mit gewünschtem Durchschnittsmolekulargewicht und gewünschten Endgruppen können durchaus erhalten werden. Diese Zwischenstufen können dann zu einem späteren Zeitpunkt mit einem Diol oder Diamin umgesetzt (kettenverlängert) werden, wobei dann das gewünschte Polyurethan bzw. Polyurethan-Polyharnstoff-Hybrid gebildet wird. Die Zwischenstufen werden im Allgemeinen als Prepolymer bezeichnet.

Geeignete Polyole für die Herstellung von Prepolymeren sind neben den Diolen auch Polyalkylenglykolether, Polyetherester oder Polyester mit endständigen Hydroxylgruppen (Polyesterpolyole).

Für die Herstellung von mechanisch oder dynamisch hochbelastbaren Polyurethanen werden vorzugsweise Polyesterpolyole eingesetzt.

Die durch Polykondensation von einfachen Diolen und Carbonsäuren hergestellten Polyetherester oder Polyester mit endständigen Hydroxylgruppen enthalten noch freie Carbonsäuren. Diese katalysieren die Reaktion zwischen den im Prepolymer enthaltenen freien Isocyanatgruppen und dem für die Kettenverlängerung benötigten Diamin, was zu kurzen Topfzeiten führt und die Reaktion unkontrollierbar macht. Zudem haben diese häufig eine geringe Hydrolysestabilität.

Die zurzeit auf dem Markt erhältlichen Carbodiimide, wie in EP-A 0799843 beschrieben, sind für den schnellen Säureabbau in der für die Herstellung von Prepolymeren vorgegebenen Zeit zu reaktionsträge, oder wegen zu geringer Löslichkeit nicht anwendbar und unwirtschaftlich.

Aufgabe der vorliegenden Erfindung war daher die Bereitstellung von Verfahren zur Steuerung (Verlängerung) der Topfzeit in mit Diaminen kettenverlängerten Polyurethan(PU)-basierten Systemen, insbesondere für die Herstellung von PU-Elastomeren, PU-Klebstoffen oder PU-Gießharzen, ohne dass dabei Materialien benötigt werden, die teuer und schwer herzustellen sind.

Bei der Topfzeit im Sinne der Erfindung handelt es sich um die Verarbeitungsdauer von reaktiven Materialien. Es ist die Zeit zwischen dem Anmischen einer mehrkomponentigen Substanz und dem Ende ihrer Verarbeitbarkeit.

Überraschenderweise konnte diese Aufgabe durch das erfindungsgemäße Verfahren gelöst werden, bei dem, dem Polyol bestimmte Carbodiimide zugesetzt werden.

Gegenstand der vorliegenden Erfindung ist daher ein Verfahren zur Verlängerung der Topfzeit in mit Diaminen kettenverlängerten Polyurethan(PU)-basierten Systemen, bei dem
in
- mindestens ein Polyol, ausgewählt aus der Gruppe der Polyesterpolyole und/oder Polyetheresterpolyole,
- mindestens ein Carbodiimid der Formel (I) 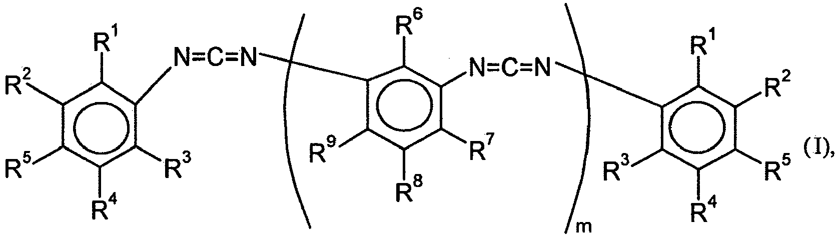
   worin m = 0 - 10,
   R¹, R³ und R⁵ unabhängig voneinander H oder Methyl bedeuten,
   R², R⁴ unabhängig voneinander für H, Methyl, einen Rest NH-C(O)-OR¹⁰, worin
   R¹⁰ für C₁-C₄-Alkyl bedeutet, oder für
   einen Rest -(CH₂)ₕ-O-[(CH₂)ₖ-O]_{g}-R¹¹ steht,
   worin h = 1-3, k= 1-3, g = 0-12 und R¹¹ für H oder C₁-C₄-Alkyl bedeuten,
   und R⁶, R⁷, R⁸ und R⁹ unabhängig voneinander H oder Methyl bedeuten, und
mindestens ein Diisocyanat und mindestens ein Diamin ausgewählt aus der Gruppe 2-Methylpropyl-3,5-diamino-4-chlorobenzoat, Bis-(4,4'-amino-3-chlorophenyl)-methan, 3,5-Dimethylthio-2,4-toluylendiamin, 3,5-Dimethylthio-2,4-toluylendiamin, 3,5-Diethyl-2,4-toluylendiamin, 3,5-Diethyl-2,6-toluylendiamin, 4,4'-Methylen-bis-(3-chloro-2,6-diethylanilin) und 1,3-Propandiol-bis(4-aminobenzoat) bei Temperaturen im Bereich von 40 bis 130°C eingerührt werden.

In einer bevorzugten Ausführungsform der Erfindung ist m = 0 und R¹, R³ und R⁵ bedeuten unabhängig voneinander H oder Methyl,
R², R⁴ stehen unabhängig voneinander für H, Methyl oder einen Rest -NH-C(O)-OR¹⁰, wobei R¹⁰ für C₁-C₄-Alkyl oder einen Rest

-(CH₂)ₕ-O-[(CH₂)ₖ-O]_{g}-R¹¹

steht,
mit h = 1-3, k= 1-3, g = 0-12 und worin R¹¹ H oder C₁-C₄-Alkyl bedeutet,
bevorzugt bedeuten R¹, R³, R⁴, R⁵ H oder Methyl, ganz besonders bevorzugt bedeuten R¹, R³, R⁵ Methyl und R⁴ H, wobei
R² für einen Rest -NH-C(O)-OR¹⁰ steht, worin R¹⁰ fur -C₁-C₄-Alkyl oder einen Rest

   -(CH₂)ₕ-O-[(CH₂)ₖ-O]_{g}-R¹¹ steht,

   mit h = 1-3, k= 1-3, g = 0-12 und R¹¹ für H oder C₁-C₄-Alkyl steht.

Ganz besonders bevorzugt ist bei m= 0, wenn R¹ für Methyl und R², R³ R⁴ und R⁵ für H steht.

Ebenfalls ganz bevorzugt ist bei m=0, dass
R³ oder R⁵ Methyl oder H bedeutet,
R² für einen Rest -NH-C(O)-OR¹⁰ steht, wobei R¹⁰ für -C₁-C₄-Alkyl oder für einen Rest

-(CH₂)ₕ-(O-(CH₂)ₖ-O)_{g}-R¹¹ steht

mit h = 1-3, k= 1-3, g = 0-12 und R¹¹ für H oder C₁-C₄-Alkyl steht
und R¹ und R⁴ für H stehen.

In einer weiteren ebenfalls bevorzugten Ausführungsform der Erfindung ist m > 0, besonders bevorzugt m = 1, mit R¹, R³ und R⁵ unabhängig voneinander H oder Methyl bedeuten und
R², R⁴ für H, Methyl oder einen Rest -NH-C(O)-OR¹⁰ steht mit R¹⁰= C₁-C₄-Alkyl oder einen Rest

-(CH₂)ₕ-O-[(CH₂)ₖ-O]_{g}-R¹¹ steht,

mit h = 1-3, k= 1-3, g = 0-12 und R¹¹ für H oder C₁-C₄-Alkyl steht, wobei mindestens einer der Reste R⁶, R⁷, R⁸ und R⁹ unabhängig voneinander H oder Methyl sind,
bevorzugt steht R¹, R³, R⁴, R⁵ für H oder Methyl, besonders bevorzugt steht R¹, R³, R⁵ für Methyl und R⁴ für H,
R²,R⁴ für H, Methyl oder einen Rest -NH-C(O)-OR¹⁰ steht, wobei R¹⁰ für C₁-C₄-Alkyl oder einen Rest -(CH₂)ₕ-O-[(CH₂)ₖ-O]_{g}-R¹¹,
mit h = 1-3, k= 1-3, g = 0-12 und R¹¹ für H oder C₁-C₄-Alkyl steht, wobei mindestens einer der Reste R^{6,} R⁷, R⁸ und R⁹ unabhängig voneinander H oder Methyl sind.

Des Weiteren bevorzugt ist, dass R¹, R³, R⁴, R⁵ für H oder Methyl, besonders bevorzugt für Methyl steht,
R² die Bedeutung von -NH-C(O)-OR¹⁰ hat wobei R¹⁰ für-C₁-C₄-Alkyl oder einen Rest

-(CH₂)ₕ-O-[(CH₂)ₖ-O]_{g}-R¹¹ steht,

mit h = 1-3, k= 1-3, g = 0-12 und R¹¹ für H oder C₁-C₄-Alkyl steht,
R⁶, R⁷, R⁸ und R⁹ unabhängig voneinander H oder Methyl bedeuten und besonders bevorzugt mindestens einer der Reste R⁶, R⁷ oder R⁹ gleich Methyl ist.

Ebenfalls ganz bevorzugt ist bei m=1 ,
dass R³ oder R⁵ die Bedeutung von Methyl oder H hat,
R² für einen Rest -NH-C(O)-OR¹⁰ steht" wobei für R¹⁰ -C₁-C₄-Alkyl oder einen Rest

-(CH₂)ₕ-O-[(CH₂)ₖ-O]_{g}-R¹¹ steht,

mit h = 1-3, k= 1-3, g = 0-12 und R¹¹ H oder C₁-C₄-Alkyl bedeutet,
und R¹, R⁴ für H stehen und
R^{6,} R⁷, R⁸ und R⁹ unabhängig voneinander H oder Methyl bedeuten, bevorzugt ist mindestens einer der Reste R⁶, R⁷ oder R⁹ Methyl.

In einer bevorzugten Ausführungsform der Erfindung hat mindestens einer der Reste R⁷ oder R⁹ die Bedeutung von Methyl.

Bei den Verbindungen der Formel (I) handelt es sich um handelsübliche Stoffe, die z.B. bei der Firma Rhein Chemie Rheinau GmbH z.B. unter dem Handelsnamen Stabaxol®, Hycasyl® erhältlich sind.

Ebenfalls bevorzugt sind Mischungen aus mehreren Carbodiimiden der Formel (I). Im Fall der Mischung können sich bei der Ermittlung des Mittelwertes für m auch gebrochenen Zahlen ergeben.

Polyole im Sinne der Erfindung werden ausgewählt aus der Gruppe der Polyesterpolyole und/oder Polyetheresterpolyole.

Bei den Polyesterpolyolen und/oder Polyetheresterpolyolen im Sinne der Erfindung handelt es sich um Verbindungen, die vorzugsweise ein Molekulargewicht in (g/mol) von bis zu 3000, bevorzugt im Bereich von 500 bis 3000 und besonders bevorzugt im Bereich von 1000 bis 2000 aufweisen.

Der Begriff Polyesterpolyol und/oder Polyetheresterpolyol im Sinne der Erfindung umfasst dabei sowohl Verbindungen mit zwei oder drei Hydroxylgruppen je Molekül als auch Verbindungen mit mehr als drei Hydroxylgruppen je Molekül. Bevorzugte Polyole sind Polyesterpolyole .

Vorteilhaft ist es, wenn das Polyol eine OH-Zahl von bis zu 200, vorzugsweise zwischen 20 und 150 und besonders bevorzugt zwischen 50 und 115, aufweist.

Insbesondere eignen sich Polyesterpolyole, die Reaktionsprodukte von verschiedenen Diolen mit aromatischen oder aliphatischen Dicarbonsäuren und/oder Polymeren von Lactonen sind.

Bevorzugt hierbei sind aromatische Dicarbonsäuren, welche zur Bildung geeigneter Polyesterpolyole verwendet werden können. Besonders bevorzugt sind hier Terephthalsäure, Isophthalsäure, Phthalsäure, Phtalsäureanhydrid sowie substituierte Dicarbonsäureverbindungen mit Benzolkern.

Als aliphatische Dicarbonsäuren sind solche bevorzugt, welche zur Bildung geeigneter Poylesterpolyole verwendet werden können, besonders bevorzugt Sebacinsäure, Adipinsäure und Glutarsäure.

Als Polymere von Lactonen sind solche bevorzugt, welche zur Bildung geeigneter Poylesterpolyole verwendet werden können, besonders bevorzugt Polycaprolacton.

Sowohl bei den Dicarbonsäuren als auch bei den Polymeren von Lactonen handelt es sich um handelsübliche Substanzen.

Besonders bevorzugt sind auch solche Diole, welche zur Bildung geeigneter Polyesterpolyole verwendet werden können, ganz besonders bevorzugt Ethylenglykol, Butandiol, Neopentylglykol, Hexandiol, Propylenglykol, Dipropylenglykol, Diethylenglykol und Cyclohexandimethanol.

Hierfür sind die Reaktionsprodukte von verschiedenen vorhergehend genannten Polyolen mit aromatischen oder aliphatischen Dicarbonsäuren und/oder Polymeren von Lactonen (z.B. Polycaprolacton) bevorzugt.

Bei den im Sinne der Erfindungen eingesetzten Polyolen handelt es sich um handelsübliche Verbindungen, die bei der Firma Bayer MaterialScience AG unter dem Handelsnamen Desmophen® erhältlich sind.

In einer weiteren Ausführungsform der Erfindung enthält die Zusammensetzung zusätzlich mindestens ein Diisocyanat.

Als Diisocyanate sind aromatische und aliphatische Diisocyanate bevorzugt. Besonders bevorzugt sind Toluol-2,4-diisocyanat, Toluol-2,6-diisocyanat, Phenylendiisocyanat, 4,4-Diphenylmethandiisocyanat, Methylen-bis(4-phenylisocynat), Naphttalen-1,5-diisocyanat, Tetramethylen-1,4.diisocyanate und/oder Hexamethylen-1,6-diisocyanat ganz besonders bevorzugt Toluol-2,4-diisocyanat und Toluol-2,6-diisocyanat.

Bei den im Sinne der Erfindungen eingesetzten Diisocyanaten handelt es sich um handelsübliche Verbindungen, die bei der Firma Bayer MaterialScience AG unter dem Handelsnamen Desmodur® erhältlich sind.

In einer weiteren Ausführungsform der Erfindung enthält die Zusammensetzung zusätzlich mindestens ein Diamin.

Als Diamine, welche für die Kettenverlängerung eingesetzt werden, sind 2-Methylpropyl-3,5-diamino-4-chlorobenzoat, Bis-(4,4'-amino-3-chlorophenyl)-methan, 3,5-Dimethylthio-2,4-toluylendiamin, 3,5-Dimethylthio-2,4-toluylendiamin, 3,5-Diethyl-2,4-toluylendiamin, 3,5-Diethyl-2,6-toluylendiamin, 4,4'-Methylen-bis-(3-chloro-2,6-diethylanilin) und 1,3-Propandiol-bis(4-aminobenzoat) bevorzugt.

Bei den im Sinne der Erfindung zur Kettenverlängerung eingesetzten Diaminen handelt es sich um handelsübliche Verbindungen, die bei der Firma Rheinchemie Rheinau GmbH unter dem Handelsnamen Addolink® erhältlich sind.

Das Verhältnis von Carbodiimid zu Polyol beträgt vorzugsweise 0,1- 5, besonders bevorzugt 1-3 Gew. Teile Carbodiimid auf 100 Gew.-Teile Polyol.

Das Verhältnis von Diisocyanat zu Polyol beträgt vorzugsweise 20 bis 50 zu 100 Gew.-Teile, besonders bevorzugt 30 zu 100 Gew.-Teile.

In den Fällen, in denen die Zusammensetzung neben dem Polyesterpolyol und/oder Polyetheresterpolyol und dem Carbodiimid sowie dem Diisocyanat zusätzlich mindestens ein Diamin enthält, beträgt die Menge an Diamin 5-30 Gew.-%, bezogen auf die Zusammensetzung.

Vorzugsweise wird in dem erfindungsgemäßen Verfahren das Polyesterpolyol und/oder Polyetheresterpolyol vorgelegt und das Carbodiimid nach Formel (I) oder eine Mischung aus Carbodiimiden nach Formel (I) eingerührt.

Die nach diesem Verfahren hergestellten Polyurethan(PU)-basierten Systeme zeichnen sich durch eine erhöhte Hydrolysestabilität aus.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die nachfolgenden Beispiele dienen der Erläuterung der Erfindung, ohne dabei limitierend zu wirken.

### Ausführunesbeispiele

In den nachfolgenden Beispielen wurden die folgenden Substanzen eingesetzt:
Desmophen® 2000MM, ein lineares Polyesterpolyol mit einer OH-Zahl von 56 mg KOH/g und einer Säurezahl von 0,83 mg KOH/g, der Firma Bayer MaterialScience AG.

Ein Carbodiimid der Formel (I) mit m = 0 und R¹=CH₃, R²=H, R³=H, R⁴=H und R⁵=H

Stabaxol^{®} P 200, ein polymeres aromatisches Carbodiimid auf Basis von Tetramethylxyloldiisocyanat der Firma Rhein Chemie Rheinau GmbH.

Stabaxol^{®} I, ein monomeres Carbodiimid auf Basis von 2,6-Diisoproylphenylenisocyanat der Firma Rhein Chemie Rheinau GmbH.

Desmodur^{®} T100, ein 2,4-Toluylendiisocyanat der Firma Bayer Material Science.

Addolink^{®} 1604, ein 2-Methylpropyl-3,5-diamino-4-chlorobenzoat der Firma Rheinchemie Rheinau GmbH als Diaminkomponente.

Carbodilite^{®} HMV-8CA: ein polymeres aliphatisches Carbodiimid der Firma Nisshinbo Industries, INC.

Es wurden die folgenden Mischungen wie folgt hergestellt.
Mischung A (Vergleich): 100g des Desmophen® 2000MM wurde bei 100°C aufgeschmolzen.
Mischung B (zur Herstellung der erfindungsgemäßen Mischung II): 100g Desmophen® 2000MM wurde bei 100°C aufgeschmolzen und mit 0,6 g des Carbodiimids der Formel (I) mit m = 0 und R¹=CH₃, R²=H, R³=H, R⁴=H und R⁵=H versetzt.
Mischung C (Vergleich): 100 g Desmophen® 2000MM wurde bei 100°C aufgeschmolzen und mit 0,6g monomerem Carbodiimid auf Basis von 2,6-Diisopropylphenylenisocyanat (Stabaxol^{®} P200) versetzt.
Mischung D (Vergleich): 100 g des Desmophen® 2000MM wurde bei 100°C aufgeschmolzen und mit 0,6g Carbodilite HMV8CA versetzt. Beide Substanzen lassen sich nicht vermischen. Damit war diese Mischung für weitere Versuche nicht einsetzbar.

Alle Angaben sind in Gew.-Teilen, sofern nicht anders ausgewiesen.

**Tabelle 1:**

| **Anteile/ Mischungs -Nr.** | **Mischung A** | **Mischung B** | **Mischung C** | **Desmodur^{®} T100** | **Addolink^{®} 1604** |
|---|---|---|---|---|---|
| I(V) | 100 | | | 21 | 16,16 |
| II (erf) | | 100 | | 21 | 16,16 |
| III (V) | | | 100 | 21 | 16,16 |

| | | | | | |
|---|---|---|---|---|---|
| V = Vergleichsbeispiel, erf= erfindungsgemäß, | | | | | |

Mischungen A bis C wurden bei Temperaturen von 80°C mit den in der Tabelle 1 angegebenen Mengen an Desmodur® T 100, bis zu einem Isocyanatgehalt von 5% umgesetzt und anschließend mit dem Kettenverlängerer Addolink® 1604 in der mit der in der Tabelle 1 angebenden Menge zur Reaktion gebracht. Von dem noch flüssigen, nach wenigen Minuten gelierenden, zu einem festen Elastomer reagierenden Gemisch wurde die Topfzeit bestimmt. Die Topfzeit ist die Zeit zwischen dem Anmischen einer mehrkomponentigen Substanz und dem Ende der Verarbeitbarkeit. Die ermittelten Werte sind in Tabelle 2 dargestellt.

**Tabelle 2:**

| **Mischung** | **Topfzeit in Sekunden** |
|---|---|
| I | 240 |
| II | 370 |
| III | 340 |

Aus dem Wert fürMischung II ist klar ersichtlich, dass die Mischung mit dem erfindungsgemäßen Carbodiimid der Formel (I) mit m = 0 und R¹=CH₃, R²=H, R³=H, R⁴=H und R⁵=H zu einer deutlich verlängerten Topfzeit und damit zu einer verbesserten Verarbeitbarkeit führt.

## Patentansprüche

1. Verfahren zur Steuerung der Topfzeit von Polyurethan(PU)-basierten Systemen, **dadurch gekennzeichnet, dass** in
- mindestens ein Polyol ausgewählt aus der Gruppe der Polyesterpolyole und/oder Polyetheresterpolyole und
- mindestens ein Carbodiimid der Formel (I) 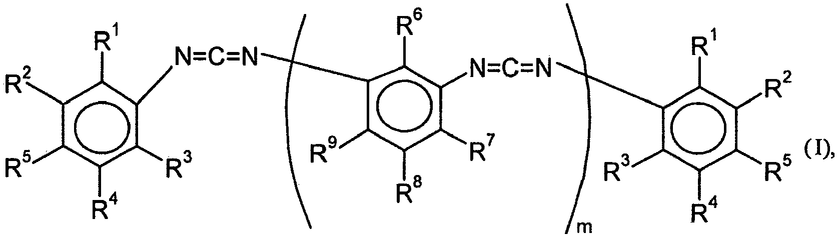
worin m = 0 - 10,
R¹, R³ und R⁵ unabhängig voneinander H oder Methyl bedeuten,
R², R⁴ unabhängig voneinander für H, Methyl, einen Rest NH-C(O)-OR¹⁰, worin R¹⁰ für C₁-C₄-Alkyl bedeutet, oder für
einen Rest -(CH₂)ₕ-O-[(CH₂)ₖ-O]_{g}-R¹¹ steht,
worin h = 1-3, k= 1-3, g = 0-12 und R¹¹ für H oder C₁-C₄-Alkyl bedeuten,
und R⁶, R⁷, R⁸ und R⁹ unabhängig voneinander H oder Methyl bedeuten, und
mindestens ein Diisocyanat und ein Diamin ausgewählt aus der Gruppe 2-Methylpropyl-3,5-diamino-4-chlorobenzoat, Bis-(4,4'-amino-3-chlorophenyl)-methan, 3,5-Dimethylthio-2,4-toluylendiamin, 3,5-Dimethylthio-2,4-toluylendiamin, 3,5-Diethyl-2,4-toluylendiamin, 3,5-Diethyl-2,6-toluylendiamin, 4,4'-Methylen-bis-(3-chloro-2,6-diethylanilin) und 1,3-Propandiol-bis(4-aminobenzoat) bei Temperaturen im Bereich von 40 bis 130°C eingerührt werden.

2. Verfahren nach Anspruch 1, **dadurch gekennzeichnet, dass** in dem Carbodiimid der Formel (I) m = 0 ist und
R¹, R³ und R⁵ unabhängig voneinander H oder Methyl bedeuten,
R², R⁴ unabhängig voneinander für H, Methyl oder einen Rest -NH-C(O)-OR¹⁰, wobei R¹⁰ für C₁-C₄-Alkyl oder für einen Rest
-(CH₂)ₕ-O-[(CH₂)ₖ-O]_{g}-R¹¹ steht,
mit h = 1-3, k= 1-3, g = 0-12 , worin R¹¹ H oder C₁-C₄-Alkyl bedeutet,
bevorzugt R¹, R³, R⁴, R⁵ H oder Methyl bedeuten, besonders bevorzugt R¹, R³, R⁵ Methyl und R⁴ H bedeuten,
R² für einen Rest NH-C(O)-OR¹⁰ steht, worin R¹⁰ für -C₁-C₄-Alkyl oder einen Rest
-(CH₂)ₕ-O-[(CH₂)ₖ-O]_{g}-R¹¹ steht,
mit h = 1-3, k= 1-3, g = 0-12 und R¹¹ für H oder C₁-C₄-Alkyl steht.

3. Verfahren nach Anspruch 1, **dadurch gekennzeichnet, dass** in dem Carbodiimid der Formel (I) m > 0 ist,
mit R¹, R³ und R⁵ unabhängig voneinander H oder Methyl bedeuten und
R², R⁴ für H, Methyl oder einen Rest -NH-C(O)-OR¹⁰ steht, wobei R¹⁰ für C₁-C₄-Alkyl oder für einen Rest -(CH₂)ₕ-O-[(CH₂)ₖ-O]_{g}-R¹¹ steht,
mit h = 1-3, k= 1-3, g = 0-12 und R¹¹ für H oder C₁-C₄-Alkyl steht, wobei mindestens einer der Reste R^{6,} R⁷, R⁸ und R⁹ unabhängig voneinander H oder Methyl sind,
bevorzugt steht R¹, R³, R⁴, R⁵ für H oder Methyl, besonders bevorzugt steht R¹, R³, R⁵ für Methyl und R⁴ für H,
k² für einen Rest -NH-C(O)-OR¹⁰, wobei R¹⁰ für -C₁-C₄-Alkyl oder einen Rest
-(CH₂)ₕ-O-[(CH₂)ₖ-O]_{g}-R¹¹,
mit h = 1-3, k= 1-3, g = 0-12 und R¹¹ für H oder C₁-C₄-Alkyl steht,
R⁶, R⁷, R⁸ und R⁹ unabhängig voneinander H oder Methyl bedeuten und besonders bevorzugt mindestens einer der Reste R⁶, R⁷ oder R⁹ gleich Methyl ist.

4. Verfahren nach einem oder mehreren der Ansprüche 1 bis 3, **dadurch gekennzeichnet, dass** es sich bei den Carbodiimiden um Mischungen aus mehreren Carbodiimiden der Formel (I) handelt.

## Claims

1. Process for controlling the pot life of polyurethane (PU) based systems, **characterized in that**
- at least one carbodiimide of formula (I) 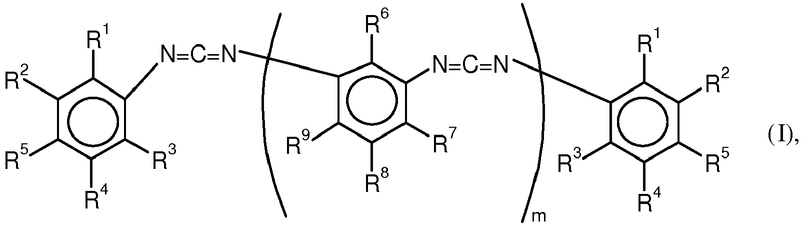
where m is 0 - 10,
R¹, R³ and R⁵ are each independently H or methyl,
R² and R⁴ are each independently H, methyl, NH-C(O)-OR¹⁰, where R¹⁰ is C₁-C₄-alkyl, or
-(CH₂)ₕ-O-[(CH₂)ₖ-O]_{g}-R¹¹,
where h is 1-3, k is 1-3, g is 0-12 and R¹¹ is H or C₁-C₄-alkyl,
and R⁶, R⁷, R⁸ and R⁹ are each independently H or methyl, and
at least one diisocyanate and one diamine selected from the group of 2-methylpropyl 3,5-diamino-4-chlorobenzoate, bis(4,4'-amino-3-chlorophenyl)methane, 3,5-dimethylthio-2,4-tolylenediamine, 3,5-dimethylthio-2,4-tolylenediamine, 3,5-diethyl-2,4-tolylenediamine, 3,5-diethyl-2,6-tolylenediamine, 4,4'-methylenebis(3-chloro-2,6-diethylaniline) and 1,3-propanediol bis(4-aminobenzoate)
are stirred into
- at least one polyol selected from the group of polyester polyols and/or polyetherester polyols and
at temperatures in the range from 40 to 130°C.

2. Process according to Claim 1, **characterized in that** in the carbodiimide of formula (I) m is 0 and
R¹, R³ and R⁵ are each independently H or methyl,
R² and R⁴ are each independently H, methyl or -NH-C(O)-OR¹⁰, where R¹⁰ is C₁-C₄-alkyl or
-(CH₂)ₕ-O-[(CH₂)ₖ-O]_{g}-R¹¹,
where h is 1-3, k is 1-3, g is 0-12 and R¹¹ is H or C₁-C₄-alkyl,
preferably R¹, R³, R⁴ and R⁵ are each H or methyl, more preferably R¹, R³ and R⁵ are each methyl and R⁴ is H,
R² is -NH-C(O)-OR¹⁰, where R¹⁰ is -C₁-C₄-alkyl or
-(CH₂)ₕ-O-[(CH₂)ₖ-O]_{g}-R¹¹,
where h is 1-3, k is 1-3, g is 0-12 and R¹¹ is H or C₁-C₄-alkyl.

3. Process according to Claim 1, **characterized in that** in the carbodiimide of formula (I) m is > 0,
with R¹, R³ and R⁵ each independently being H or methyl, and
R² and R⁴ are each H, methyl or -NH-C(O)-OR¹⁰, where R¹⁰ is C₁-C₄-alkyl or
-(CH₂)ₕ-O-[(CH₂)ₖ-O]_{g}-R¹¹,
where h is 1-3, k is 1-3, g is 0-12 and R¹¹ is H or C₁-C₄-alkyl, provided one or more of R⁶, R⁷, R⁸ and R⁹ are each independently H or methyl, preferably R¹, R³, R⁴ and R⁵ are each H or methyl, more preferably R¹, R³ and R⁵ are each methyl and R⁴ is H,
R² is -NH-C(O)-OR¹⁰, where R¹⁰ is -C₁-C₄-alkyl or
-(CH₂)ₕ-O-[(CH₂)ₖ-O]_{g}-R¹¹,
where h is 1-3, k is 1-3, g is 0-12 and R¹¹ is H or C₁-C₄-alkyl,
R⁶, R⁷, R⁸ and R⁹ are each independently H or methyl and more preferably at least one of R⁶, R⁷ and R⁹ is methyl.

4. Process according to one or more of Claims 1 to 3, **characterized in that** the carbodiimides are mixtures of two or more carbodiimides of formula (I).

## Revendications

1. Procédé d'ajustement de la vie en pot de systèmes à base de polyuréthane (PU), **caractérisé en ce que**
- au moins un polyol choisi dans le groupe constitué par les polyester-polyols et/ou les polyéther-ester-polyols, et
- au moins un carbodiimide de formule (I) 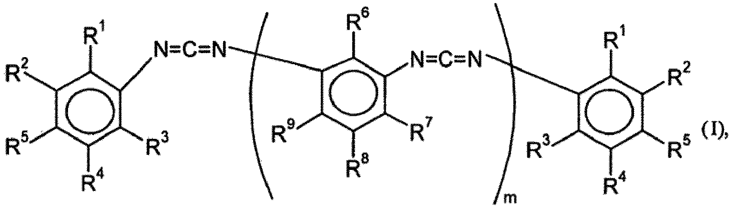
dans laquelle m = 0 à 10,
R¹, R³ et R⁵ signifient indépendamment les uns des autres H ou méthyle,
R², R⁴ représentent indépendamment l'un de l'autre H, méthyle, un radical NH-C(O)-OR¹⁰, R¹⁰ signifiant alkyle en C₁-C₄, ou un radical -(CH₂)ₕ-O-[(CH₂)ₖ-O]_{g}-R¹¹, avec h = 1 à 3, k = 1 à 3, g = 0 à 12, et R¹¹ signifiant H ou alkyle en C₁-C₄,
et R⁶, R⁷ R⁸ et R⁹ signifient indépendamment les uns des autres H ou méthyle, et
- au moins un diisocyanate et une diamine choisie dans le groupe constitué par le 3,5-diamino-4-chlorobenzoate de 2-méthylpropyle, le bis-(4,4'-amino-3-chlorophényl)-méthane, la 3,5-diméthylthio-2,4-toluylènediamine, la 3,5-diméthylthio-2,4-toluylènediamine, la 3,5-diéthyl-2,4-toluylènediamine, la 3,5-diéthyl-2,6-toluylènediamine, la 4,4'-méthylène-bis-(3-chloro-2,6-diéthylaniline) et le bis(4-aminobenzoate) de 1,3-propanediol, sont incorporés à des températures dans la plage allant de 40 à 130 °C.

2. Procédé selon la revendication 1, **caractérisé en ce que**, dans le carbodiimide de formule (I), m = 0 et
R¹, R³ et R⁵ signifient indépendamment les uns des autres H ou méthyle,
R², R⁴ représentent indépendamment l'un de l'autre H, méthyle ou un radical -NH-C(O)-OR¹⁰, R¹⁰ signifiant alkyle en C₁-C₄, ou un radical -(CH₂)ₕ-O-[(CH₂)ₖ-O]_{g}-R¹¹, avec h = 1 à 3, k = 1 à 3, g = 0 à 12, et R¹¹ signifiant H ou alkyle en C₁-C₄,
de préférence R¹, R³, R⁴, R⁵ signifient H ou méthyle, de manière particulièrement préférée R¹, R³, R⁵ signifient méthyle et R⁴ signifie H,
R² représente un radical -NH-C(O)-OR¹⁰, R¹⁰ signifiant alkyle en C₁-C₄, ou un radical -(CH₂)ₕ-O-[(CH₂)ₖ-O]_{g}-R¹¹, avec h = 1 à 3, k = 1 à 3, g = 0 à 12, et R¹¹ signifiant H ou alkyle en C₁-C₄.

3. Procédé selon la revendication 1, **caractérisé en ce que**, dans le carbodiimide de formule (I), m > 0, et
R¹, R³ et R⁵ signifient indépendamment les uns des autres H ou méthyle, R², R⁴ représentent H, méthyle ou un radical -NH-C(O)-OR¹⁰, R¹⁰ signifiant alkyle en C₁-C₄, ou un radical -(CH₂)h-O-[(CH₂)ₖ-O]_{g}-R¹¹, avec h = 1 à 3, k = 1 à 3, g = 0 à 12, et R¹¹ signifiant H ou alkyle en C₁-C₄, au moins un des radicaux R⁶, R⁷ R⁸ et R⁹ représentant indépendamment H ou méthyle,
de préférence R¹, R³, R⁴, R⁵ signifient H ou méthyle, de manière particulièrement préférée R¹, R³, R⁵ signifient méthyle et R⁴ signifie H,
R² représente un radical -NH-C(O)-OR¹⁰, R¹⁰ signifiant alkyle en C₁-C₄, ou un radical -(CH₂)h-O-[(CH₂)ₖ-O]_{g}-R¹¹, avec h = 1 à 3, k = 1 à 3, g = 0 à 12, et R¹¹ signifiant H ou alkyle en C₁-C₄,
R⁶, R⁷ R⁸ et R⁹ signifient indépendamment les uns des autres H ou méthyle, et de manière particulièrement préférée au moins un des radicaux R⁶, R⁷ ou R⁹ signifie méthyle.

4. Procédé selon une ou plusieurs des revendications 1 à 3, **caractérisé en ce que** les carbodiimides sont des mélanges de plusieurs carbodiimides de formule (I).
